(19) **Europäisches Patentamt**
**European Patent Office**
**Office européen des brevets**

(11) **EP 1 538 504 B1**

(12) **FASCICULE DE BREVET EUROPEEN**

(45) Date de publication et mention
de la délivrance du brevet:
**11.03.2009 Bulletin 2009/11**

(51) Int Cl.:
***G05D 1/00*** *(2006.01)*

(21) Numéro de dépôt: **04292748.3**

(22) Date de dépôt: **22.11.2004**

(54) **Procédé et système de pilotage automatique d'un aéronef à l'approche d'une position de parachutage**

Verfahren und System zur automatischen Führung eines sich einer Fallschirmsposition nähernden Flugzeuges

Method and system for automatically controlling an aircraft approaching a position of parachuting

(84) Etats contractants désignés:
**AT BE BG CH CY CZ DE DK EE ES FI FR GB GR HU IE IS IT LI LU MC NL PL PT RO SE SI SK TR**

(30) Priorité: **04.12.2003 FR 0314242**

(43) Date de publication de la demande:
**08.06.2005 Bulletin 2005/23**

(73) Titulaire: **AIRBUS France**
**31060 Toulouse (FR)**

(72) Inventeur: **Haas, Philippe**
**31300 Toulouse (FR)**

(74) Mandataire: **Hauer, Bernard**
**Cabinet Bonnétat**
**29, Rue de Saint-Pétersbourg**
**75008 Paris (FR)**

(56) Documents cités:
**EP-A- 0 637 787          US-A- 3 875 379**
**US-B1- 6 507 782**

**Description**

La présente invention concerne un procédé et un système de pilotage automatique d'un aéronef à l'approche d'une position de parachutage.

Pour réaliser un parachutage, par exemple de matériel et/ou de troupes, il est généralement nécessaire que l'aéronef, par exemple un avion de transport militaire, arrive à la position de parachutage planifiée lors de la préparation de mission à un temps d'arrivée prédéterminé, afin de pouvoir réaliser le parachutage à l'horaire prévu, notamment lorsque des troupes se trouvent au sol pour réceptionner les éléments parachutés. De plus, pour faciliter le parachutage, il est préférable que l'aéronef arrive à ladite position de parachutage avec une vitesse prédéterminée constante.

Aussi, pour pouvoir remplir ces conditions, on détermine généralement un profil de vitesse particulier à vitesse décroissante que l'on applique à l'aéronef pendant la phase d'approche, entre la vitesse de croisière et ladite vitesse prédéterminée de parachutage. De plus, pour faciliter le travail du largueur et éviter trop de secousses, un tel profil de vitesse comprend en général une pluralité de paliers de vitesse constante, séparés par des phases de décélération.

Bien entendu, ce profil de vitesse est déterminé en préparation de mission. Il ne prend pas en compte le vent.

Dans ces conditions, le profil de vitesse prédéterminé n'est pas optimal et ne permet pas d'atteindre la position de parachutage au temps d'arrivée prévu de sorte que le parachutage est alors réalisé soit en avance, soit en retard par rapport à l'horaire prévu.

Par ailleurs, par le document US-6 507 782, on connaît un système de commande pour un aéronef, qui prévoit de modifier un profil de vitesse de l'aéronef pour lui permettre d'atteindre un point particulier à un temps d'arrivée requis.

La présente invention a pour objet de remédier aux inconvénients précités. Elle concerne un procédé de pilotage automatique d'un aéronef lors d'une phase d'approche d'une position de parachutage prédéterminée, à laquelle doit être réalisé un parachutage à partir dudit aéronef, permettant d'engendrer et d'appliquer audit aéronef un profil de vitesse optimal qui permet à ce dernier d'atteindre ladite position de parachutage exactement au temps initialement prévu.

A cet effet, selon l'invention, ledit procédé est tel que :

- au cours de ladite phase d'approche, on applique automatiquement à l'aéronef un profil de vitesse à vitesse décroissante comprenant une pluralité de paliers de vitesse constante, séparés par des phases de décélération ;
- l'aéronef doit atteindre ladite position de parachutage à un temps d'arrivée théorique prédéterminé, avec une vitesse prédéterminée ; et
- au cours de ladite phase d'approche, automatiquement :

  • on détermine un temps d'arrivée effectif auquel l'aéronef atteindra effectivement ladite position de parachutage ;
  • on calcule la différence entre lesdits temps d'arrivée théorique et effectif ; et
  • si cette différence diffère de zéro :

    * on corrige ledit profil de vitesse en modifiant la longueur d'au moins deux paliers de vitesse constante de manière à annuler ladite différence ; et
    * on applique ledit profil de vitesse ainsi corrigé audit aéronef.

Ainsi, grâce à l'invention, on corrige, si nécessaire, le profil de vitesse de manière à avoir (et à appliquer à l'aéronef) en permanence un profil de vitesse optimal permettant d'atteindre ladite position de parachutage audit temps d'arrivée théorique prédéterminée.

Cette correction peut être réalisée tout au long de la phase d'approche. De plus, elle est mise en oeuvre automatiquement, ce qui permet à l'équipage d'être déchargé de cette tâche et de se concentrer sur d'autres tâches ou actions nécessaires, notamment en vue du parachutage.

En outre, ladite correction est réalisée de façon simple et rapide, sans pour autant modifier l'aspect général du profil de vitesse.

Lorsque ledit temps d'arrivée effectif est postérieur audit temps d'arrivée théorique, c'est-à-dire lorsque l'aéronef est en retard, de façon avantageuse, on augmente la longueur d'au moins un premier palier présentant une première vitesse constante, et on réduit la longueur d'au moins un second palier présentant une seconde vitesse constante, ladite première vitesse étant supérieure à ladite seconde vitesse.

Dans ce cas, avantageusement, on augmente ledit premier palier et on réduit ledit second palier d'une même longueur xa qui vérifie la relation suivante :

$$xa = \left| \frac{\Delta t . Vi . Vj}{(Vj - Vi)} \right|$$

dans laquelle :

- Δt représente ladite différence de temps (entre lesdits temps d'arrivée théorique et effectif) ;
- Vi représente ladite première vitesse constante ; et
- Vj représente ladite seconde vitesse constante.

En outre, lorsque ledit temps d'arrivée effectif est antérieur audit temps d'arrivée théorique, c'est-à-dire lorsque l'aéronef est en avance, de façon avantageuse, on réduit la longueur d'au moins un premier palier présentant une première vitesse constante, et on augmente la longueur d'au moins un second palier présentant une seconde vitesse constante, ladite première vitesse étant supérieure à ladite seconde vitesse.

Dans ce cas, avantageusement, on réduit ledit premier palier et on augmente ledit second palier d'une même longueur xb qui vérifie la relation suivante :

$$xb = \left| \frac{\Delta t.Vi.Vj}{(Vi - Vj)} \right|$$

dans laquelle :

- Δt représente ladite différence de temps (entre lesdits temps d'arrivée théorique et effectif) ;
- Vi représente ladite première vitesse constante ; et
- Vj représente ladite seconde vitesse constante.

Dans un mode de réalisation particulier :

- on modifie la longueur de plus de deux paliers de vitesse constante ; et/ou
- on réduit complètement la longueur d'au moins un palier de vitesse constante de manière à supprimer ce palier.

La présente invention concerne également un système de pilotage automatique d'un aéronef pour piloter ledit aéronef au moins lors d'une phase d'approche d'une position de parachutage prédéterminée, à laquelle doit être réalisé un parachutage à partir dudit aéronef.

Selon l'invention, ledit système comporte :

- un moyen pour fournir un profil de vitesse à vitesse décroissante devant permettre à l'aéronef d'atteindre ladite position de parachutage à un temps d'arrivée théorique prédéterminé, avec une vitesse prédéterminée, ledit profil de vitesse comprenant une pluralité de paliers de vitesse constante, séparés par des phases de décélération ;
- un dispositif de pilotage automatique pour déterminer des ordres de pilotage de l'aéronef de sorte qu'il suive ledit profil de vitesse ;
- des moyens d'actionnement d'organes commandés de l'aéronef, auxquels on applique lesdits ordres de pilotage ;
- un moyen pour déterminer un temps d'arrivée effectif auquel l'aéronef atteindra effectivement ladite position de parachutage ;
- un moyen pour calculer la différence entre lesdits temps d'arrivée théorique et effectif ; et
- un moyen pour comparer cette différence à zéro et pour corriger ledit profil de vitesse si cette différence diffère de zéro, en modifiant la longueur d'au moins deux paliers de vitesse constante de manière à annuler ladite différence, le profil de vitesse ainsi corrigé étant fourni audit dispositif de pilotage automatique pour déterminer des ordres de pilotage correspondants qui sont appliqués auxdits moyens d'actionnement.

Dans un mode de réalisation particulier, ledit premier moyen comporte une disquette, sur laquelle est enregistré ledit profil de vitesse, et qui peut être lue, à l'aide d'un moyen de lecture approprié, par ledit dispositif de pilotage automatique, ce qui permet d'engendrer le profil de vitesse en préparation de mission et de l'enregistrer sur ladite disquette. Il suffit ensuite de simplement entrer ladite disquette dans ledit moyen de lecture pour que le dispositif de pilotage automatique prenne en compte ledit profil de vitesse enregistré, ce qui permet de réduire considérablement la charge de travail de l'équipage.

En outre, avantageusement, ledit troisième moyen est intégré dans ledit dispositif de pilotage automatique.

Les figures du dessin annexé feront bien comprendre comment l'invention peut être réalisée. Sur ces figures, des références identiques désignent des éléments semblables.

La figure 1 est le schéma synoptique d'un système de pilotage conforme à l'invention.

Les figures 2 à 6 sont des graphiques montrant différents profils de vitesse, permettant de bien expliquer la présente invention.

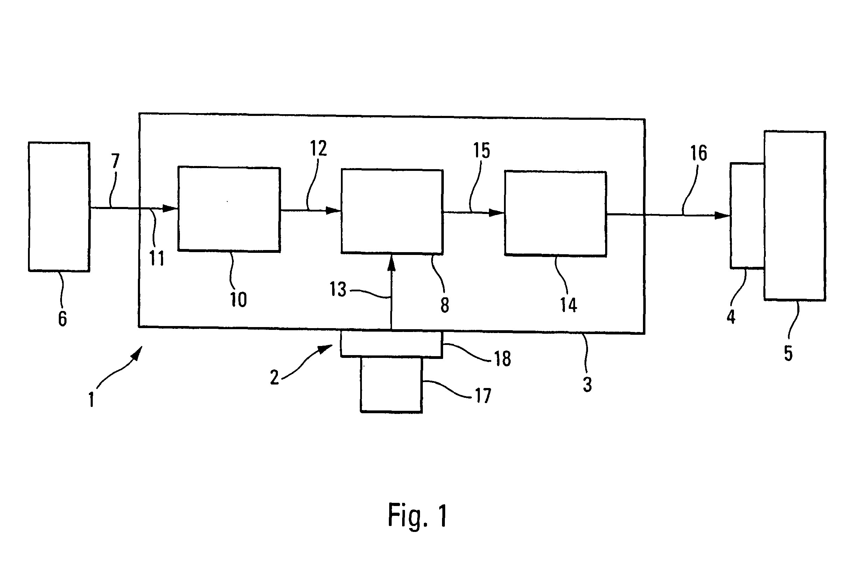

Le système 1 conforme à l'invention et représenté schématiquement sur la figure 1 est destiné au pilotage automatique d'un aéronef non représenté, par exemple un avion de transport militaire, pour piloter ledit aéronef au moins lors d'une phase d'approche d'une position de parachutage prédéterminée, à laquelle doit être réalisé un parachutage de matériel et/ou de troupes à partir dudit aéronef.

Ledit système 1 comporte :

- un moyen 2 pour fournir un profil de vitesse PV permettant à l'aéronef d'atteindre ladite position de parachutage à un temps d'arrivée théorique TO prédéterminé, avec une vitesse prédéterminée ;
- un dispositif de pilotage automatique 3, par exemple un pilote automatique, pour déterminer des ordres de pilotage de l'aéronef de sorte qu'il suive ledit profil de vitesse PV ; et
- des moyens d'actionnement 4 d'organes commandés 5 tels que par exemple des gouvernes (de direction, de profondeur, ...) de l'aéronef, moyens d'actionnement 4 qui sont reliés audit dispositif 3 et auxquels on applique les ordres de pilotage déterminés par ce dernier.

Pour pouvoir mettre à jour automatiquement ledit profil de vitesse PV, essentiellement lorsque l'aéronef se trouve dans ladite phase d'approche, ledit système 1 comporte de plus :

- un moyen 6 qui est relié par une liaison 7 au dispositif 3, pour déterminer un temps d'arrivée effectif Teff, auquel l'aéronef atteindra effectivement ladite position de parachutage, à partir d'informations actuellement disponibles (la position actuelle de l'aéronef et des conditions actuelles telles que les caractéristiques du vent, ...) ; et
- un moyen 8 qui est intégré dans le dispositif 3, pour corriger ledit profil de vitesse PV, en fonction dudit temps d'arrivée effectif Teff et dudit temps d'arrivée théorique TO, le profil de vitesse ainsi corrigé étant utilisé pour calculer de nouveaux ordres de pilotage qui sont appliqués auxdits moyens d'actionnement 4.

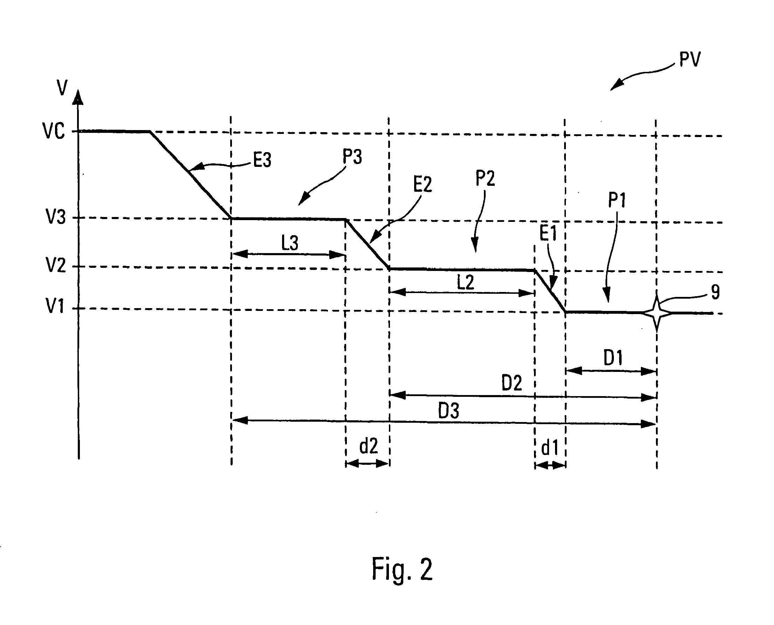

Selon l'invention, le profil de vitesse PV, dont la vitesse V est appliquée à l'aéronef entre une phase de croisière antérieure à vitesse constante VC et la position de parachutage 9 atteinte à une vitesse V1 comporte, comme représenté sur la figure 2 :

- des paliers P1, P2, P3 à vitesse constante, respectivement à vitesses V1, V2 et V3 ; et
- des phases de décélération E1, E2, E3, qui relient à chaque fois deux paliers P1, P2, P3 successifs. De préférence, lesdites phases de décélération E1, E2, E3 présentent le même facteur de décélération $\underline{a}$.

Comme les vitesses V1, V2 et V3 sont des valeurs constantes, ainsi que ledit facteur de décélération $\underline{a}$, il en est de même des distances d1 et d2 pour passer respectivement des vitesses V2 à V1 et V3 à V2 ou des temps t1 et t2 correspondants nécessaires à cette décélération. En effet, ces paramètres, vérifient les relations suivantes :

$$\begin{cases} t1 = (V1 - V2) / a \\ t2 = (V2 - V3) / a \\ d1 = (V1 - V2) \cdot (V1 + V2) / (2a) \\ d2 = (V2 - V3) \cdot (V2 + V3) / (2a) \end{cases}$$

Il en est de même pour tout paramètre tn ou dn entre une vitesse Vn+1 d'un palier Pn+1 et une vitesse Vn d'un palier Pn suivant :

$$\begin{cases} tn = (Vn - Vn+1) / a \\ dn = (Vn - Vn+1) \cdot (Vn + Vn+1) / (2a) \end{cases}$$

Selon l'invention, ledit dispositif 3 comporte :

- un moyen 10 qui est relié par une liaison 11 au moyen 6, pour calculer la différence Δt entre lesdits temps d'arrivée théorique et effectif TO et Teff : Δt = Teff-TO ;
- ledit moyen 8 qui est relié par une liaison 12 au moyen 10, qui compare cette différence Δt à zéro et qui, si cette différence Δt diffère de zéro, corrige ledit profil de vitesse PV reçu du moyen 2 par une liaison 13, en modifiant la longueur d'au moins deux paliers de vitesse constante de manière à annuler ladite différence Δt ; et
- un moyen 14 qui est relié par une liaison 15 au moyen 8, qui reçoit le profil de vitesse (corrigé ou non) dudit moyen 8 et qui calcule des ordres de pilotage conformes à ce profil de vitesse, qu'il transmet auxdits moyens d'actionnement 4 par l'intermédiaire d'une liaison 16.

Dans un mode de réalisation particulier, ledit moyen 2 comporte une disquette 17, sur laquelle est enregistré ledit profil de vitesse PV, et qui peut être lue, à l'aide d'un moyen de lecture 18, par ledit dispositif de pilotage automatique 3.

Ceci permet d'engendrer le profil de vitesse PV en préparation de mission et de l'enregistrer sur ladite disquette 17. Il suffit ensuite de simplement entrer ladite disquette 17 dans ledit moyen de lecture 18 pour que le dispositif de pilotage automatique 3 prenne en compte ledit profil de vitesse PV enregistré, ce qui permet bien entendu de réduire la charge de travail de l'équipage.

Plus précisément, selon l'invention, lorsque ledit temps d'arrivée effectif Teff est postérieur audit temps d'arrivée théorique TO, c'est-à-dire lorsque l'aéronef est en retard par rapport à l'horaire prévu, pour rattraper ce retard, on augmente la longueur d'au moins un premier palier, par exemple le palier P3, présentant une première vitesse constante (par exemple V3), et on réduit la longueur d'au moins un second palier, par exemple le palier P2, présentant une seconde vitesse constante (par exemple V2) qui est inférieure à ladite première vitesse constante (par exemple V3).

Dans ce cas, lorsque l'on modifie la longueur uniquement desdits deux paliers P3 et P2, on augmente ledit palier P3 et on réduit ledit palier P2 d'une même longueur x1 qui vérifie la relation suivante :

$$x1 = \left| \frac{\Delta t.V2.V3}{(V2 - V3)} \right|$$

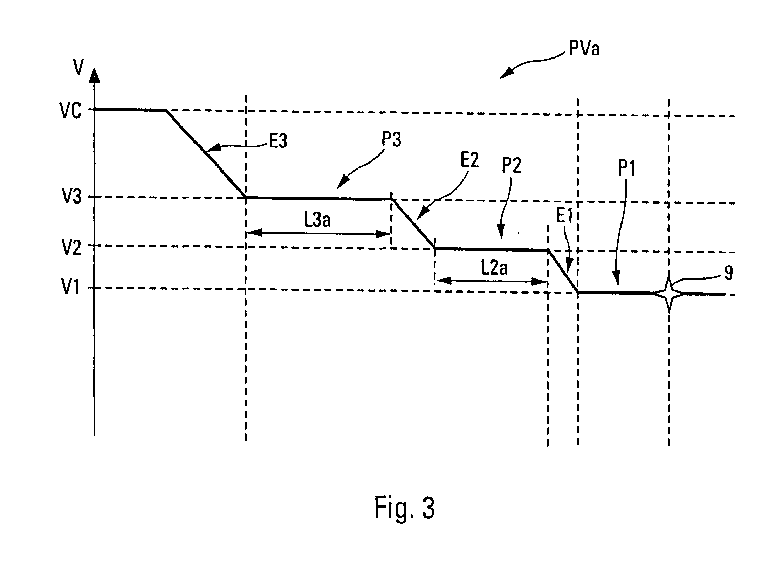

Le palier P3 présente alors une longueur L3a = L3 + x1 et le palier P2 une longueur L2a = L2-x1, comme représenté sur la figure 3 qui montre le profil de vitesse PVa obtenu par cette correction.

Une telle modification de la longueur de palier est possible jusqu'à une valeur maximale de x1 qui vérifie :

$$x1 = D2\text{-}D1\text{-}d1,$$

ce qui correspond à un retard rattrapable maximal de

$$\Delta t = (D2\text{-}D1\text{-}d1).(V3\text{-}V2) \ / \ (V3.V2).$$

On notera que D1, D2 et D3 représentent les distances entre la position de parachutage 9 et les débuts respectivement desdits paliers P1, P2 et P3, comme représenté sur la figure 2.

On notera en outre que le temps nécessaire pour atteindre la position de parachutage 9, à partir du début du palier P3, est :

* ti = (D3-D2-d2) / V3+t2+(D2-D1-d1) / V2+t1 +D1/V1,
avec le profil de vitesse initial PV non corrigé de la figure 2 ; et
* tj = (D3+x1-D2-d2) / V3+t2+(D2-D1-x1-d1) / V2 +t1 +D1/V1,
avec le profil de vitesse corrigé PVa de la figure 3.

Par ailleurs, selon l'invention, lorsque ledit temps d'arrivée effectif Teff est antérieur audit temps d'arrivée théorique TO, c'est-à-dire lorsque l'aéronef est en avance par rapport à l'horaire prévu, pour annuler cette avance, on réduit la longueur d'au moins un premier palier, par exemple le palier P3, présentant une première vitesse constante (par exemple V3), et on augmente la longueur d'au moins un second palier, par exemple le palier P2, présentant une seconde vitesse constante (par exemple V2) qui est inférieure à ladite première vitesse constante (par exemple V3).

Dans ce cas, lorsque l'on modifie la longueur uniquement des deux paliers P3 et P2, on augmente ledit palier P3 et on réduit ledit palier P2 d'une même longueur x2 qui vérifie la relation suivante :

$$x2 = \left| \frac{\Delta t . V2 . V3}{(V2 - V3)} \right|$$

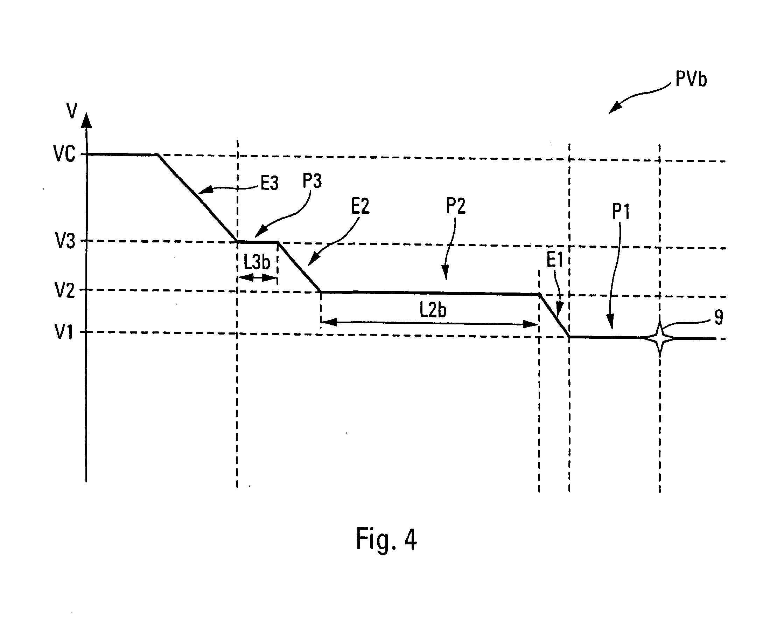

Le palier P3 présente alors une longueur L3b = L3-x2 et le palier P2 une longueur L2b = L2 + x2, comme représenté sur la figure 4 qui montre le profil de vitesse PVb obtenu par cette correction.

Une telle modification est possible jusqu'à une valeur maximale de x2 qui vérifie :

$$x2 = D3\text{-}D2\text{-}d2,$$

ce qui correspond à une avance maximale retardable de

$$\Delta t = (D3\text{-}D2\text{-}d2).(V3\text{-}V2) \ / \ (V3.V2).$$

On notera que le temps tk nécessaire pour atteindre la position de parachutage 9, à partir du début du palier P3, vérifie alors la relation :

$$tk = (D3\text{-}D2\text{-}d2\text{-}x1) \ / \ V3 + t2 + (D2\text{-}D1\text{-}d1 + x1) \ / \ V2 \ + t1 + D1/V1,$$

avec le profil de vitesse corrigé PVb de la figure 4.

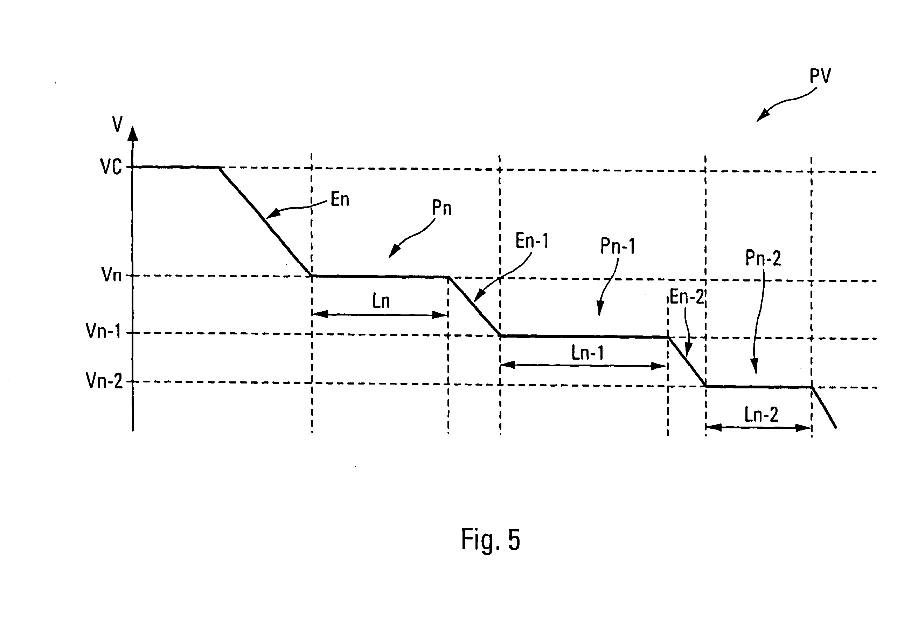

Plus généralement, lorsque le profil de vitesse PV comporte $\underline{n}$ paliers P1, P2, ..., Pn-2, Pn-1, Pn, respectivement de vitesses constantes V1 à Vn, comme représenté partiellement sur la figure 5, on peut appliquer la modification de longueur de paliers conforme à l'invention, à deux quelconques (ou plus de deux quelconques) desdits $\underline{n}$ paliers P1 à Pn.

Ainsi, en l'appliquant entre une palier Pn et un palier Pn-1, on peut :

- soit rattraper une durée tl tel que :

$$tl = (Dn\text{-}1 - Dn\text{-}2 - dn\text{-}2) \ (Vn - Vn\text{-}1) \ / \ (Vn.Vn\text{-}1) \ ;$$

- soit ralentir le vol d'une durée tm tel que :

$$tm = (Dn - Dn\text{-}1 - dn\text{-}1) \ (Vn - Vn\text{-}1) \ / \ (Vn.Vn\text{-}1).$$

Si une telle durée tl ou tm est insuffisante, on peut réaliser la même opération entre deux autres paliers, par exemple les paliers Pn-1 et Pn-2 du profil de vitesse, et ainsi de suite si cela est nécessaire.

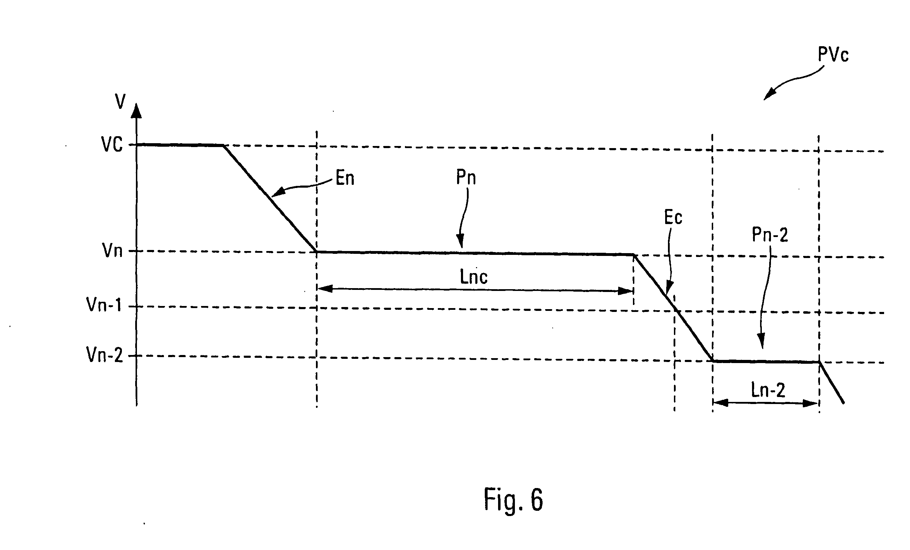

Dans un mode de réalisation particulier, on peut réduire la longueur d'un palier Pn-1 jusqu'à le supprimer complètement, comme représenté sur la figure 6.

Dans ce cas, le profil de vitesse corrigé PVc présente un palier Pn de longueur Lnc = Ln + Ln-1 et la phase de décélération Ec entre les paliers Pn et Pn-2 présente la longueur (et donc la durée) des deux phases de décélération initiales En-1 et En-2 représentées sur la figure 5.

La correction illustrée sur la figure 6, pour laquelle on transmet la longueur Ln-1 du palier Pn-1 supprimé, à un palier Pn à vitesse constante Vn supérieure, permet de rattraper un retard.

En revanche, s'il est nécessaire de retarder une avance, on transmet cette longueur Ln-1 du palier Pn-1 supprimé, à un palier Pn-2 à vitesse constante Vn-2 inférieure.

Par conséquent, le système 1 conforme à l'invention corrige, si nécessaire, le profil de vitesse PV de manière à avoir (et à appliquer à l'aéronef) en permanence un profil de vitesse optimal permettant d'atteindre ladite position de parachutage 9 audit temps d'arrivée théorique TO prédéterminée.

Cette correction peut être réalisée tout au long de la phase d'approche. De plus, elle est mise en oeuvre automatiquement par ledit système 1, ce qui permet à l'équipage d'être déchargé de cette tâche et de se concentrer sur d'autres tâches ou actions nécessaires, notamment en vue du parachutage.

En outre, la correction mise en oeuvre par le système 1 est réalisée de façon simple et rapide, sans pour autant modifier l'aspect général du profil de vitesse PV.

**Revendications**

1. Procédé de pilotage automatique d'un aéronef lors d'une phase d'approche d'une position de parachutage (9) prédéterminée, à laquelle doit être réalisé un parachutage à partir dudit aéronef, procédé selon lequel :

   - au cours de ladite phase d'approche, on applique automatiquement à l'aéronef un profil de vitesse (PV) à vitesse décroissante comprenant une pluralité de paliers (P1 à Pn) de vitesse constante, séparés par des phases de décélération (E1 à En) ;
   - l'aéronef doit atteindre ladite position de parachutage (9) à un temps d'arrivée théorique prédéterminé, avec une vitesse prédéterminée ; et
   - au cours de ladite phase d'approche, automatiquement :

     • on détermine un temps d'arrivée effectif auquel l'aéronef atteindra effectivement ladite position de parachutage (9) ;
     • on calcule la différence entre lesdits temps d'arrivée théorique et effectif ; et
     • si cette différence diffère de zéro :

       * on corrige ledit profil de vitesse (PV) en modifiant la longueur d'au moins deux paliers de vitesse constante de manière à annuler ladite différence ; et
       * on applique ledit profil de vitesse (PVa, PVb, PVc) ainsi corrigé audit aéronef.

2. Procédé selon la revendication 1,
   **caractérisé en ce que**, lorsque ledit temps d'arrivée effectif est postérieur audit temps d'arrivée théorique, on augmente la longueur (L3) d'au moins un premier palier (P3) présentant une première vitesse constante (V3), et on réduit la longueur (L2) d'au moins un second palier (P2) présentant une seconde vitesse constante (V2), ladite première vitesse (V3) étant supérieure à ladite seconde vitesse (V2).

3. Procédé selon la revendication 2,
   **caractérisé en ce que** l'on augmente ledit premier palier (P3) et l'on réduit ledit second palier (P2) d'une même longueur xa qui vérifie la relation suivante :

$$xa = \left| \frac{\Delta t.Vi.Vj}{(Vj - Vi)} \right|$$

   dans laquelle :

   - $\Delta t$ représente ladite différence de temps ;
   - Vi représente ladite première vitesse constante ; et
   - Vj représente ladite seconde vitesse constante.

4. Procédé selon la revendication 1,
   **caractérisé en ce que**, lorsque ledit temps d'arrivée effectif est antérieur audit temps d'arrivée théorique, on réduit la longueur (L3) d'au moins un premier palier (P3) présentant une première vitesse constante (V3), et on augmente la longueur (L2) d'au moins un second palier (P2) présentant une seconde vitesse constante (V2), ladite première vitesse (V3) étant supérieure à ladite seconde vitesse (V2).

5. Procédé selon la revendication 4,
   **caractérisé en ce que** l'on réduit ledit premier palier (P3) et l'on augmente ledit second palier (P2) d'une même longueur xb qui vérifie la relation suivante :

$$xb = \left| \frac{\Delta t . Vi . Vj}{(Vi - Vj)} \right|$$

dans laquelle :

- $\Delta t$ représente ladite différence de temps ;
- Vi représente ladite première vitesse constante ; et
- Vj représente ladite seconde vitesse constante.

**6.** Procédé selon l'une quelconque des revendications 1, 2 et 4, **caractérisé en ce que** l'on modifie la longueur de plus de deux paliers de vitesse constante.

**7.** Procédé selon l'une quelconque des revendications précédentes, **caractérisé en ce que** l'on réduit complètement la longueur (Ln-1) d'au moins un palier (Pn-1) de vitesse constante (Vn-1) de manière à supprimer ce palier (Pn-1).

**8.** Système de pilotage automatique d'un aéronef pour piloter ledit aéronef au moins lors d'une phase d'approche d'une position de parachutage (9) prédéterminée, à laquelle doit être réalisé un parachutage à partir dudit aéronef, ledit système (1) comportant :

- un moyen (2) pour fournir un profil de vitesse (PV) à vitesse décroissante devant permettre à l'aéronef d'atteindre ladite position de parachutage (9) à un temps d'arrivée théorique prédéterminé, avec une vitesse prédéterminée, ledit profil de vitesse (PV) comprenant une pluralité de paliers (P1 à Pn) de vitesse constante, séparés par des phases de décélération (E1 à En) ;
- un dispositif de pilotage automatique (3) pour déterminer des ordres de pilotage de l'aéronef de sorte qu'il suive ledit profil de vitesse (PV) ;
- des moyens d'actionnement (4) d'organes commandés (5) de l'aéronef, auxquels on applique lesdits ordres de pilotage ;
- un moyen (6) pour déterminer un temps d'arrivée effectif auquel l'aéronef atteindra effectivement ladite position de parachutage (9) ;
- un moyen (10) pour calculer la différence entre lesdits temps d'arrivée théorique et effectif; et
- un moyen (8) pour comparer cette différence à zéro et pour corriger ledit profil de vitesse (PV) si cette différence diffère de zéro, en modifiant la longueur d'au moins deux paliers de vitesse constante de manière à annuler ladite différence, le profil de vitesse (PVa, PVb, PVc) ainsi corrigé étant fourni audit dispositif de pilotage automatique (3) pour déterminer des ordres de pilotage correspondants qui sont appliqués auxdits moyens d'actionnement (4).

**9.** Système selon la revendication 8, **caractérisé en ce que** ledit premier moyen (2) comporte une disquette (17), sur laquelle est enregistré ledit profil de vitesse (PV), et qui peut être lue, à l'aide d'un moyen de lecture (18), par ledit dispositif de pilotage automatique (3).

**10.** Système selon l'une des revendications 8 et 9, **caractérisé en ce que** ledit troisième moyen (8) est intégré dans ledit dispositif de pilotage automatique (3).

**11.** Aéronef, **caractérisé en ce qu'**il comporte un système (1) tel que celui spécifié sous l'une quelconque des revendications 8 à 10.

**Claims**

**1.** A method of automatic piloting of an aircraft during a phase of approach to a predetermined airdrop position (9), at which an airdrop is to be made from said aircraft, method according to which:

- in the course of said approach phase, a speed profile (PV) with decreasing speed comprising a plurality of constant-speed levels (P1 to Pn), separated by deceleration phases (E1 to En), is applied automatically to the aircraft;
- the aircraft must reach said airdrop position (9) at a predetermined theoretical arrival time, with a predetermined speed; and
- in the course of said approach phase, automatically:

    • an actual arrival time at which the aircraft will actually reach said airdrop position (9) is determined;
    • the difference between said theoretical and actual arrival times is calculated; and
    • if this difference differs from zero:

        * said speed profile (PV) is corrected by modifying the length of at least two constant-speed levels in such a way as to cancel said difference; and
        * said speed profile (PVa, PVb, PVc) thus corrected is applied to said aircraft.

2. The method as claimed in claim 1,
   **characterized in that**, when said actual arrival time is later than said theoretical arrival time, the length (L3) of at least one first level (P3) exhibiting a first constant speed (V3) is increased, and the length (L2) of at least one second level (P2) exhibiting a second constant speed (V2) is decreased, said first speed (V3) being greater than said second speed (V2).

3. The method as claimed in claim 2,
   **characterized in that** said first level (P3) is increased and said second level (P2) is decreased by one and the same length xa which satisfies the following relation:

$$xa = \left| \frac{\Delta t.Vi.Vj}{(Vj - Vi)} \right|$$

in which:

    - $\Delta t$ represents said time difference;
    - Vi represents said first constant speed; and
    - Vj represents said second constant speed.

4. The method as claimed in claim 1,
   **characterized in that**, when said actual arrival time is earlier than said theoretical arrival time, the length (L3) of at least one first level (P3) exhibiting a first constant speed (V3) is decreased, and the length (L2) of at least one second level (P2) exhibiting a second constant speed (V2) is increased, said first speed (V3) being greater than said second speed (V2).

5. The method as claimed in claim 4,
   **characterized in that** said first level (P3) is decreased and said second level (P2) is increased by one and the same length xb which satisfies the following relation:

$$xb = \left| \frac{\Delta t.Vi.Vj}{(Vi - Vj)} \right|$$

in which:

    - $\Delta t$ represents said time difference;

9

- Vi represents said first constant speed; and
- Vj represents said second constant speed.

6. The method as claimed in any one of claims 1, 2 and 4,
**characterized in that** the length of more than two constant-speed levels is modified.

7. The method as claimed in any one of the preceding claims,
**characterized in that** the length (Ln-1) of at least one constant-speed (Vn-1) level (Pn-1) is decreased completely in such a way as to eliminate this level (Pn-1).

8. A system for the automatic piloting of an aircraft so as to pilot said aircraft at least during a phase of approach to a predetermined airdrop position (9), at which an airdrop is to be made from said aircraft, said system (1) comprising:

- a means (2) for providing a speed profile (PV) with decreasing speed that has to allow the aircraft to reach said airdrop position (9) at a predetermined theoretical arrival time, with a predetermined speed , said speed profile comprising a plurality of constant-speed levels (P1 to Pn), separated by deceleration phases (E1 to En);
- an automatic piloting device (3) for determining orders for piloting the aircraft so that it follows said speed profile (PV);
- means of actuation (4) of controlled members (5) of the aircraft, to which said piloting orders are applied ;
- a means (6) for determining an actual arrival time at which the aircraft will actually reach said airdrop position (9);
- a means (10) for calculating the difference between said theoretical and actual arrival times; and
- a means (8) for comparing this difference to zero and for correcting said speed profile (PV) if this difference differs from zero, by modifying the length of at least two constant-speed levels in such a way as to cancel said difference, the speed profile (PVa, PVb, PVc) thus corrected being provided to said automatic piloting device (3) to determine corresponding piloting orders which are applied to said means of actuation (4).

9. The system as claimed in claim 8,
**characterized in that** said first means (2) comprises a diskette (17), on which is recorded said speed profile (PV), and which can be read, with the aid of a means of reading (18), by said automatic piloting device (3).

10. The system as claimed in one of claims 8 and 9,
**characterized in that** said third means (8) is integrated into said automatic piloting device (3).

11. An aircraft,
**characterized in that** it comprises a system (1) such as that specified under any one of claims 8 to 10.

**Patentansprüche**

1. Verfahren zur automatischen Steuerung eines Flugzeugs in einer Anflugphase auf eine vorgegebene Fallschirmabwurf-Position (9), bei welcher ein Fallschirmabwurf aus dem Flugzeug durchzuführen ist, wobei bei dem Verfahren:

- im Verlauf der Anflugphase automatisch ein Geschwindigkeitsprofil (PV) mit abnehmender Geschwindigkeit angewandt wird, welches eine Vielzahl von horizontalen Strecken (P1 bis Pn) von konstanter Geschwindigkeit, die durch Verzögerungsphasen (E1 bis En) voneinander getrennt sind, umfasst,
- das Flugzeug die Fallschirmabwurf-Position (9) zu einem vorgegebenen theoretischen Ankunftszeitpunkt mit einer vorgegebenen Geschwindigkeit erreichen muss, und
- im Verlauf der Anflugphase automatisch:

• ein tatsächlicher Ankunftszeitpunkt, zu dem das Flugzeug die Fallschirmabwurf-Position (9) tatsächlich erreichen wird, bestimmt wird
• die Differenz zwischen dem theoretischen und dem tatsächlichen Ankunftszeitpunkt berechnet wird und
• wenn diese Differenz von Null verschieden ist:

* das Geschwindigkeitsprofil (PV) durch Änderung der Länge von wenigstens zwei horizontalen Strekken von konstanter Geschwindigkeit derart korrigiert wird, dass die Differenz aufgehoben wird und
* das auf diese Weise korrigierte Geschwindigkeitsprofil (PVa, PVb, PVc) auf das Flugzeug angewandt wird.

**2.** Verfahren nach Anspruch 1,
**dadurch gekennzeichnet, dass**, wenn der tatsächliche Ankunftszeitpunkt zeitlich nach dem theoretischen Ankunftszeitpunkt liegt, die Länge (L3) wenigstens einer ersten horizontalen Strecke (P3), die eine erste konstante Geschwindigkeit (V3) aufweist, erhöht wird und die Länge (L2) wenigstens einer zweiten horizontalen Strecke (P2), die eine zweite konstante Geschwindigkeit (V2) aufweist, verringert wird, wobei die erste Geschwindigkeit (V3) größer als die zweite Geschwindigkeit (V2) ist.

**3.** Verfahren nach Anspruch 2,
**dadurch gekennzeichnet, dass** die erste horizontale Strecke (P3) und die zweite horizontale Strecke (P2) um ein und dieselbe Länge xa verlängert beziehungsweise verkürzt wird, welche die folgende Beziehung erfüllt:

$$xa \; = \; \left| \frac{\Delta t . Vi . Vj}{(Vj \; - \; Vi)} \right|$$

in der:

- $\Delta t$ die Zeitdifferenz repräsentiert,
- Vi die erste konstante Geschwindigkeit repräsentiert und
- Vj die zweite konstante Geschwindigkeit repräsentiert.

**4.** Verfahren nach Anspruch 1,
**dadurch gekennzeichnet, dass**, wenn der tatsächliche Ankunftszeitpunkt zeitlich vor dem theoretischen Ankunftszeitpunkt liegt, die Länge (L3) wenigstens einer ersten horizontalen Strecke (P3), die eine erste konstante Geschwindigkeit (V3) aufweist, verringert wird und die Länge (L2) wenigstens einer zweiten horizontalen Strecke (P2), die eine zweite konstante Geschwindigkeit (V2) aufweist, erhöht wird, wobei die erste Geschwindigkeit (V3) größer als die zweite Geschwindigkeit (V2) ist.

**5.** Verfahren nach Anspruch 4,
**dadurch gekennzeichnet, dass** die erste horizontale Strecke (P3) und die zweite horizontale Strecke (P2) um ein und dieselbe Länge xb verkürzt beziehungsweise verlängert wird, welche die folgende Beziehung erfüllt:

$$xb \; = \; \left| \frac{\Delta t . Vi . Vj}{(Vi \; - \; Vj)} \right|$$

in der:

- $\Delta t$ die Zeitdifferenz repräsentiert,
- Vi die erste konstante Geschwindigkeit repräsentiert und
- Vj die zweite konstante Geschwindigkeit repräsentiert.

**6.** Verfahren nach einem der Ansprüche 1, 2 oder 4,
**dadurch gekennzeichnet, dass** die Länge von mehr als zwei horizontalen Strecken von konstanter Geschwindigkeit verändert wird.

**7.** Verfahren nach einem der vorhergehenden Ansprüche,
**dadurch gekennzeichnet, dass** die Länge (Ln-1) wenigstens einer horizontalen Strecke (Pn-1) von konstanter Geschwindigkeit (Vn-1) so vollständig verringert wird, dass diese horizontale Strecke (Pn-1) entfällt.

**8.** System zur automatischen Steuerung eines Flugzeugs, um das Flugzeug zumindest in einer Anflugphase auf eine vorgegebene Fallschirmabwurf-Position (9), bei welcher ein Fallschirmabwurf aus dem Flugzeug durchzuführen ist, zu steuern, wobei das System (1) Folgendes umfasst:

- ein Mittel (2) zur Bereitstellung eines Geschwindigkeitsprofils (PV) mit abnehmender Geschwindigkeit, das es dem Flugzeug ermöglichen muss, die Fallschirmabwurf-Position (9) zu einem vorgegebenen theoretischen Ankunftszeitpunkt mit einer vorgegebenen Geschwindigkeit zu erreichen, wobei das Geschwindigkeitsprofil (PV) eine Vielzahl von horizontalen Strecken (P1 bis Pn) von konstanter Geschwindigkeit, die durch Verzögerungsphasen (E1 bis En) voneinander getrennt sind, umfasst,

- eine automatische Steuerungsvorrichtung (3), um Steuerbefehle des Flugzeugs derart zu bestimmen, dass es dem Geschwindigkeitsprofil (PV) folgt,

- Betätigungsmittel (4) von Steuergliedern (5) des Flugzeugs, auf welche die Steuerbefehle angewandt werden,

- ein Mittel (6) zum Bestimmen eines tatsächlichen Ankunftszeitpunkts, zu dem das Flugzeug die Fallschirmabwurf-Position (9) tatsächlich erreichen wird,

- ein Mittel (10) zum Berechnen der Differenz zwischen dem theoretischen und dem tatsächlichen Ankunftszeitpunkt und

- ein Mittel (8) zum Vergleichen dieser Differenz mit Null und zum Korrigieren des Geschwindigkeitsprofils (PV), wenn diese Differenz von Null verschieden ist, indem die Länge von wenigstens zwei horizontalen Strecken mit konstanter Geschwindigkeit derart verändert wird, dass die Differenz aufgehoben wird, wobei das auf diese Weise korrigierte Geschwindigkeitsprofil (PVa, PVb, PVc) zum Bestimmen der entsprechenden Steuerbefehle, welche auf die Betätigungsmittel (4) angewandt werden, an die automatische Steuerungsvorrichtung (3) abgegeben wird.

9. System nach Anspruch 8,
**dadurch gekennzeichnet, dass** das erste Mittel (2) eine Diskette (17) umfasst, auf der das Geschwindigkeitsprofil (PV) gespeichert ist und welche mittels eines Lesegerätes (18) durch die automatische Steuerungsvorrichtung (3) auslesbar ist.

10. System nach Anspruch 8 oder 9,
**dadurch gekennzeichnet, dass** das dritte Mittel (8) in die automatische Steuerungsvorrichtung (3) integriert ist.

11. Flugzeug,
**dadurch gekennzeichnet, dass** es ein System (1), wie das unter einem der Ansprüche 8 bis 10 spezifizierte umfasst.

Fig. 1

EP 1 538 504 B1

Fig. 2

EP 1 538 504 B1

Fig. 3

Fig. 4

Fig. 5

Fig. 6

EP 1 538 504 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6507782 B